# EUROPEAN PATENT APPLICATION

(11) **EP 2 058 962 A1**
(43) Date of publication of application: **13.05.2009**
(21) Application number: 08168489.6
(22) Date of filing: 06.11.2008
(51) Int. Cl.: H04B 10/155, H04B 10/24, H04J 14/02

(54) **Wavelength-tunable transmitter with integrated filtering for a (D)WDM-optical communication network, and corresponding transponder**

(30) Priority: 07.11.2007 FR 0758849
(71) Applicant: Alcatel Lucent, 75008 Paris (FR)
(72) Inventor: Bissessur, Hans, 91620, NOZAY (FR); Bertaina, Alain, 75014, PARIS (FR); Courtois, Olivier, 91620, NOZAY (FR); Brandon, Eric, 91620, NOZAY (FR); Zami, Thierry, 91620, NOZAY (FR); Bastide, Christian, 91620, NOZAY (FR)
(74) Representative: Shamsaei Far, Hassan

(57) **Abstract**

An optical signal transmitter (TR1) is intended to form part of an optical communication network capable of carrying wavelength-multiplexed optical signals. This transmitter (TR1) is tunable according to a multiplicity of wavelengths, and comprises an integrated filtering means (FM1), tunable according to the wavelengths of the multiplicity, so as to block the optical signals whose wavelength is different from a transmission wavelength selected from among the wavelengths of said multiplicity.

## Description

The invention pertains to optical communication networks capable of carrying wavelength-multiplexed optical signals (or (D)WDM for "(Dense) Wavelength Division Multiplexing"), and in particular those known as flexible networks.

As is known to a person skilled in the art, it is particularly useful to make D(WDM) optical networks as flexible as possible, so that they can support increasing throughput and/or an increasing number of users. To that end, it has been proposed to use so-called "flexible" switching nodes, each comprising a switching device (potentially an OADM ("Optical Add/Drop Multiplexer") device or an OXC ("Optical Cross-Connect") device, potential one with an insertion and/or extraction function), connected to multiple optical signal transmitters and multiple optical signal receivers (which may serve as components of transponders) and wherein all the wavelengths of a selected multiplicity of wavelengths may be assigned to each of the transmitters and each of the receivers.

As such nodes must perform numerous wavelength division multiplexing (WDM) operations, it is understood that it is important for the connection between the optical signals which are delivered by the transponders connected to them are completely passive, i.e. they are impervious to wavelengths over a relatively wide range, typically 40 to 50 nm. This sort of connection may, for example, be created using fused couplers whose inputs, unlike WDM couplers, are not statically assigned to preset wavelengths.

As the laser source of the transmitters has a limited lateral-mode (secondary) rejection band, typically 40 to 45 dB, the coupling by means of a passive coupler of the optical signals that they deliver causes all of their secondary modes to be added at the output. In other words, the coupler causes an accumulation of noise generated by the laser sources of the various transponders' transmitters.

In order to attempt to compensate for this drawback, it has been proposed to increase the single-mode suppression ratio (or SMSR) or the relative intensity noise (or RIN) of every laser source. Unfortunately, this is not sufficient, particularly due, in practice, to the limit of the maximum value of a wavelength-tunable laser source's SMSR, typically 40 to 45 dB. When 16 (or 32, respectively) laser sources with an SMSR of 40 to 45 dB are coupled, the result is a secondary mode rejection band of about 28 to 33 dB (or 25 to 30 dB, respectively). Consequently, if the intention is to operate with an optical signal-to-noise ratio (or OSNR) greater than about 22 dB (as with a metropolitan transponder or a transponder that operates at 40 Gbit/s), very little room remains for degradations in the OSNR that may be introduced by the line amplifiers. In practice, this causes transmission distances to be reduced.

The purpose of the invention is therefore to improve the situation.

To that end, it discloses an optical signal transmitter, which may be tuned according to a multiplicity of wavelengths, intended to form part of an optical communication network, such as a flexible network, capable of carrying wavelength-multiplexed optical signals (or a (D)WDM network), and comprising an integrated filtering means, tunable along the multiplicity's wavelengths in order to block the optical signals the wavelength of which is different from the transmission wavelength which was selected from among those of the multiplicity.

The invention also discloses a first optical signal transponder, intended to form part of a (D)WDM network, such as a flexible network, and comprising:
- an optical signal transmitter of the type described above, and
- an optical signal receiver.

For example, the receiver may comprise or be coupled to the output of a filtering means which is tunable according to the wavelengths of the multiplicity in order to block the optical signals the wavelength of which is different from a reception wavelength which was selected from among those of the multiplicity.

The invention also discloses a second optical signal transponder, intended to form part of a (D)WDM network, such as a flexible network, and comprising:
- an optical signal transmitter, tunable according to the wavelengths of the multiplicity,
- a filtering means coupled to the output of the transmitter and tunable according to the wavelengths of the multiplicity in order to block the optical signals the wavelength of which is different from a transmission wavelength which was selected from among those of the multiplicity, and
- an optical signal receiver.

For example, the receiver may comprise or be coupled to the output of a filtering means which is tunable according to the wavelengths of the multiplicity in order to block the optical signals the wavelength of which is different from a reception wavelength which was selected from among those of the multiplicity.

The invention also discloses a third optical signal transponder, intended to form part of a (D)WDM network, such as a flexible network, and comprising:
- an optical signal transmitter tunable according to a multiplicity of wavelengths and an optical signal receiver,
- a first circulator coupled to the output of the transmitter and to the input of the receiver,
- a second circulator comprising an input/output coupled to an input/output of the first circulator, an input, and an output, and
- a filtering means coupled to the inputs/outputs of the first circulator and the second circulator, and tunable according to the wavelengths of the multiplicity in order to block the optical signals the wavelength of which is different from a wavelength which was selected from among those of the multiplicity.

The invention further discloses an optical signal insertion module for an optical communication network (D)WDM, comprising at least one transmitter of the type described above (having integrated tunable filtering means) for inserting optical signals filtered along an insertion wavelength chosen from among those of a multiplicity of wavelengths.

This insertion module may, for example, comprise at least two optical signal transmitters, and coupling means designed to passively couple the filtered optical signals delivered by the transmitters.

Other characteristics and advantages of the invention will become apparent upon examining the detailed description below, and the attached drawings, in which:
- Figure 1 schematically depicts terminals equipped with inventive transponders and coupled to an OADM switching device, which itself is coupled to a WDM optical communication network.
- Figure 2 schematically and functionally depicts a first example embodiment of an inventive transponder,
- Figure 3 schematically and functionally depicts a second example embodiment of an inventive transponder,
- Figure 4 schematically and functionally depicts a third example embodiment of an inventive transponder,
- Figure 5 schematically and functionally depicts an example embodiment of an inventive insertion module, which may form part of an inventive switching device.
- Figure 6 schematically and functionally depicts an example embodiment of an inventive extraction module, which may form part of an inventive switching device.

The attached drawings may serve not only to complete the invention, but may also contribute to defining it, if need be.

The object of the invention is to offer flexible switching nodes which do not require a reduction in transmission distances within an optical communication network, for example a flexible network, capable of carrying wavelength-multiplexed optical signals (also known as a (D)WDM network).

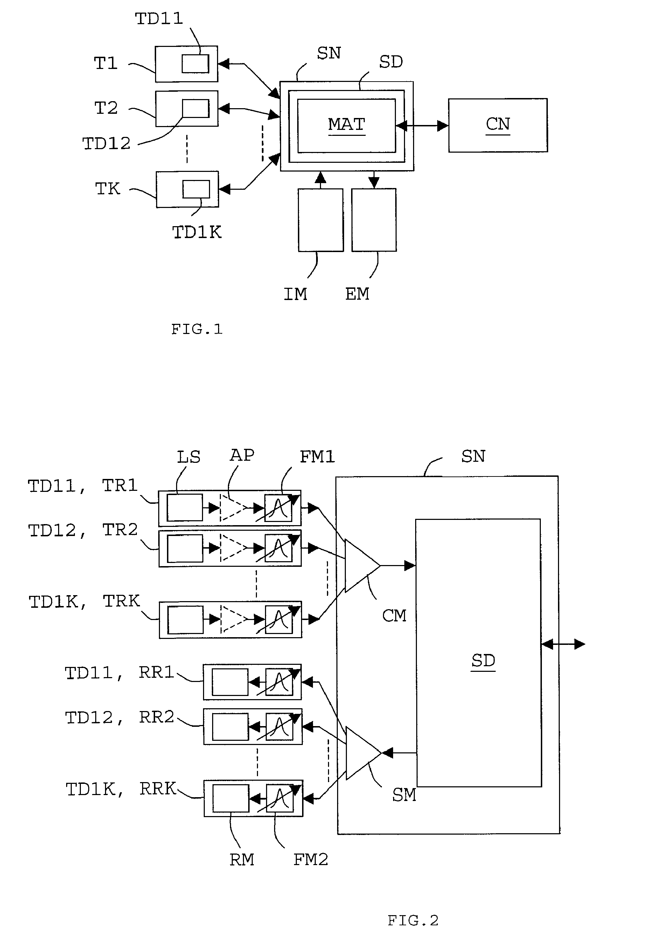

Figure 1 schematically depicts a part of a (D)WDM network, for example a flexible network, comprising an optical signal switching node SN to which communication terminals Tk are connected (k = 1 to K, where K ≥1).

In the following description, it is assumed by way of a non-limiting example that the switching node SN comprises at least one optical add/drop multiplexer, or OADM. However, it may also comprise an optical cross-connect, or OXC, potentially one with an insertion and/or extraction function.

Example embodiments (non-limiting in nature) of OADMs that may be used in the invention include those described in the document by W.J. Tomlinson, "Wavelength Selective Switching-Architecture and Technology overview", Proceedings OFC04, WC3 (2004).

Each inventive communication terminal Tk comprises at least one transponder TDnk (n = 1 to 3), i.e. a device tasked with transmitting and/or receiving optical signals according to a multiplicity of wavelengths (referred to by the variable i (i = 1 to 1, where I ≥1 for transmission wavelengths, and by the variable k (j = 1 to J, where J ≥1 for reception wavelengths; I may be equal to or different from J).

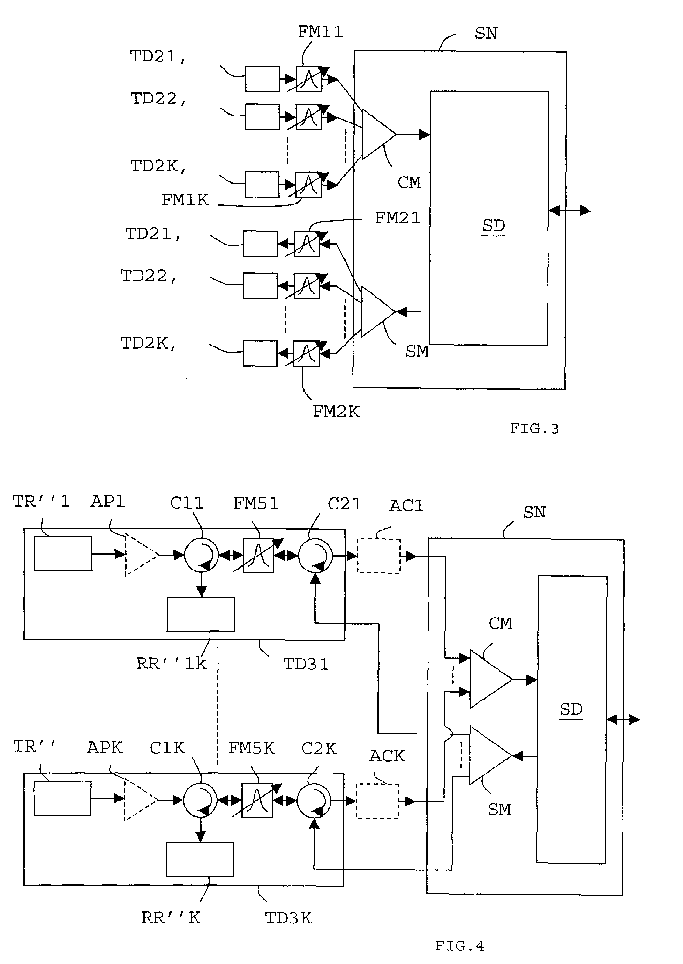

In the following description, as depicted in Figures 2 and 3, it is assumed by way of a non-limiting example that each terminal Tk comprises only one transponder TDnk (n = 1 or 2) comprising a transmitter TRk (or TR"k) and a receiver RRk (or RR"k). It should be noted that in Figures 2 and 3, the transmitter TRk (or TR"k) and the receiver RRk (or RR"k) of a transponder TD1k (or TD2k) are spatially separated, for the purpose of simplifying the connections to the coupling module CM and splitting module SM of the switching node SN. However, in practice, the transmitter TRk (or TR"k) and the receiver RRk (or RR"k) of a transponder TD1k (or TD2k) are located side by side.

As a reminder, a transmitter TRk (or TR"k) particularly comprises a laser source, which is tunable according to a multiplicity (I) of wavelengths. For example, I = 16 or 32. At a given moment, the network CN may thereby select the wavelength that each transmitter TRk (or TR"k) must use in order to deliver its optical signals to be transmitted.

The invention proposes to install a filtering module FM1 (or FM1k) which is tunable along the multiplicity's wavelengths within each transmitter TRk, downstream of its laser source LS (see figure 2), or to place said module downstream of each transmitter TR"k (see Figure 3), for the purpose of blocking the optical signals whose wavelength is different from the transmission wavelength which had momentarily been selected by the network CN for the transmitter TRk (or TR"k) in question.

Consequently, in the example shown in Figure 2, each transmitter TRk comprises a laser source, which delivers not only the optical signals along the transmission wavelength which had momentarily been assigned to it, but also the noise which is particularly made up of the lateral (or secondary) modes; and an integrated tunable filtering module FM1, which is momentarily configured so as to allow through only the optical signals whose transmission wavelength is approximately the same as the one assigned. In this manner, each transmitter TRk delivers filtered optical signals at its output, i.e. signals stripped of secondary modes, which therefore all have approximately the same transmission wavelength as the one momentarily assigned to said transmitter TRk.

In the non-limiting example depicted in Figure 2, an optical power amplifier PA is placed between the output of each transmitter TRk and the input of the associated filtering module FM1, so as to be able to amplify the optical signals delivered by this transmitter TRk. However, this amplifier PA is not mandatory.

In the example shown in Figure 3, each transmitter TR"k primarily comprises a laser source which, at its output, delivers not only optical signals along the transmission wavelength which had momentarily been assigned to it, but also the noise which is particularly made up of the lateral (or secondary) modes. The output of the transmitter TR"k (which, here, is the output of its laser source) feeds into the input of an external tunable filtering module FM1 k which is momentarily configured so as to allow through only the optical signals whose transmission wavelength is approximately the same as the one assigned. In this manner, each tunable filtering module FM1 L filtered optical signals at its output, i.e. signals stripped of secondary modes, which therefore all have approximately the same transmission wavelength as the one momentarily assigned to said transmitter TR"k to which it is coupled.

Though not depicted in Figure 3, it is also possible, as in the example of Figure 2, to place an optical power amplifier PA between the output of each transmitter TR"k and the input of the associated filtering module FM1, so as to be able to amplify the optical signals delivered by this transmitter TR"k. In one variant, the amplifier PA may form part of the transponder TD2k. However, this amplifier PA is not mandatory.

Example embodiments (non-limiting in nature) of tunable filtering modules FM1 (or FM1 k) that may be used in the invention are known to a person skilled in the art. Some of these examples are described, among other places, at the URL http://products.jdsu.com/assets/public/pdf/vcf50100_ds_cc_ae_020806.pdf.

The node CN comprises at least one passive coupling module CM, such as a passive coupler, comprising at least K inputs, respectively coupled to the outputs of the transmitters TRk of the transponders TD1k (Figure 2) or to the outputs of the tunable filtering modules FM1k (Figure 3), and potentially to at least one insertion module IM, and to at least one output coupled to one of the inputs of the switching matrix MAT of the switching device SD of the node CN. This coupling module CM is designed so as to passively couple the filtered optical signals which are delivered by the transmitters TRk or the tunable filtering modules FM1k, and potentially to at least one insertion module IM.

Example embodiments (non-limiting in nature) of passive couplers CM that may be used in the invention are known to a person skilled in the art. Some of these examples are described, among other places, at the URL http://www.oplink.com/pdf/SWFC54_34.pdf.

Owing to the invention, the secondary modes, which are generated by the laser sources, are removed before being coupled into the passive coupler CM. Consequently, it is now possible to maintain a high SMSR, typically about 40 dB, as long as the rejection of the secondary modes by the tunable filtering modules FM1 (FM1k) is sufficiently high. For example, if tunable filtering modules FM1 (FM1k) exhibiting a rejection of about 20 dB and laser sources exhibiting a SMSR of about 40 dB are used, then after filtering, secondary modes whose level is about 39.4 dB are achieved.

Each receiver RRk (or RR"k) is capable of receiving one of the J wavelengths of a multiplicity of wavelengths. For example J = 16, 32, 48 or 96. At a given moment, the network CN may thereby select the wavelength that each receiver RRk (or RR"k) must use in order to receive the transmitted optical signals that are intended to reach it.

In the non-limiting example embodiment depicted in Figure 2, each receiver RRk comprises, upstream of its optical signal reception module RM, an integrated filtering module FM2 which is tunable according to the wavelengths of the multiplicity, for the purpose of blocking the optical signals whose wavelength is different from the reception wavelength momentarily assigned to its receiver by the network CN.

In the example shown in Figure 2, each receiver RRK comprises a tunable filtering module FM2 whose input is coupled to one of the outputs of a splitting module SM of the switching node SN in order to be supplied with optical signals, and whose output delivers filtered optical signals, i.e. signals stripped of secondary modes, which therefore all have approximately the same reception wavelength as the one momentarily assigned to its receiver RRk. In this manner, the reception module RM of each receiver RRk, at its input, which is coupled to the output of the tunable filtering module FM2 associated, only receives optical signals with approximately the same reception wavelength as the one momentarily assigned to its receiver RRk.

In the example non-limiting embodiment depicted in Figure 3, each receiver RR"k primarily comprises a reception module whose input is coupled to an external tunable filtering module FM2k which is tunable according to the wavelengths of the multiplicity, for the purpose of blocking the optical signals whose wavelength is different from the reception wavelength momentarily assigned by the network CN to the receiver RR"k to which it is coupled.

In the example shown in Figure 3, each tunable filtering module FM2k comprises an input which is coupled to one of the outputs of a splitting module SM of the switching node SN in order to be supplied with optical signals, and an output delivering filtered optical signals, i.e. signals stripped of secondary modes, which therefore all have approximately the same reception wavelength as the one momentarily assigned to the receiver RR"k to which it is coupled. In this manner, each receiver RR"k, at its input, which is coupled to the output of the associated tunable filtering module FM2k, only receives optical signal with approximately the same reception wavelength as the one momentarily assigned to it.

The splitting module SM, which is depicted in Figure 2 or 3, is designed so as to separate (or split), such as by doing so passively, the optical signals that it receives at an input, which is coupled to one of the outputs of the switching matrix MAT of the switching device SD of the node CN. In one embodiment, the splitting module SM delivers, at its outputs, either optical signals of all wavelengths (passively, as with a power divider) or optical signals which respectively and primarily have the reception wavelengths which are momentarily assigned to the various receivers (RRk, RR"k or RR'p (of an extraction module EM). It should be noted that a splitting module or splitter SM may potentially comprise at least two inputs coupled to two outputs of the switching matrix MAT of the switching device SD of the switching node SN.

The splitting module SM may, for example, be a passive coupler (or "splitter"), similar to the one that forms the coupling module CM. If so, it acts as a power divider, which distributes the input power received to its various outputs.

It is important to note that it is possible to envision a first variant embodiment of a transponder TDk comprising a transmitter TRk with an integrated tunable filtering module FM1, of the type depicted in Figure 2, and a receiver RR"k coupled to an external tunable filtering module FM2k, as depicted in Figure 3 It is also possible to envision a second variant embodiment of a transponder TDk comprising a transmitter TR"k coupled to an external tunable filtering module FM1k, as depicted in Figure 3, and a receiver RRK with an integrated tunable filtering module FM2, of the type depicted in Figure 2.

Figure 4 schematically and functionally depicts a third example embodiment of an inventive transponder TD3k. In this third example, the transponder TD3k (of a terminal Tk) comprises an optical signal transmitter TR"k (k = 1 to K, where K > 1), of the same type as the one described above with reference to Figure 3, an optical signal receiver RR"k of the same type as the one described above with reference to Figure 3, a first circulator C1 k, a second circulator C2k, and a filtering module FM5k.

The transmitter TR"k is therefore tunable according to a multiplicity of wavelengths.

The transmitter TR"k is coupled to an input of the first circulator C1 k, and the receiver RR"k is coupled to the output of that same first circulator C1 k. Said first circulator C1 k further comprises an input/output coupled to a first input/output of the filtering module FM5k.

In the non-limiting example depicted in Figure 4, an optical power amplifier APk is placed between the output of each transmitter TR"k and the input of the associated first circulator C1 k, so as to be able to amplify the optical signals delivered by this transmitter TR"k. However, this amplifier APk is not mandatory.

The filtering module FM5k is tunable according to the wavelengths of the multiplicity, for the purpose of blocking the optical signals whose wavelength is different from either the transmission wavelength which had momentarily been selected by the network CN for the transmitter TR"k, or the reception wavelength which had momentarily been selected by the network CN for the receiver RR"k. It comprises a second input/output which is coupled to an input/output of the second circulator C2k.

It should be noted that in the presence of an optical power amplifier APk, the filtering module FM5k also (and advantageously) filters the spontaneous emission of this optical power amplifier APk.

The second circulator C2k further comprises an input for receiving the optical signals intended for the receiver RR"k and an output for delivering the filtered optical signals sent from the transmitter TR"k.

It should be understood that depending on the instructions issued by the network CN, the transponder TD3k operates either in sending (or transmission) mode to deliver the optical signals from its transmitter TR"k as filtered by the filtering module FM5k, in which case the input and input/output of its first circulator C1 k are coupled to one another and the output of its second circulator C2k are coupled to one another; or in receiving mode, to deliver to its receiver RR"k the optical signals from the network CN as filtered by the filtering module FM5k, in which case the input and input/output of its second circulator C2k are coupled to one another and the input/output and the output of its first circulator C1 k are coupled to one another.

It should further be understood that this third example embodiment requires that the reception wavelength of a receiver RR"k is identical to the transmission wavelength of the transmitter TR"k of the same transponder T3Dk.

The output of each second circulator C2k is coupled to one of the inputs of a passive coupling module CM, which is of the same type as those (CM) described above with reference to Figures 2 and 3. This passive coupler CM is therefore designed so as to passively couple the filtered optical signals that it receives at its inputs which are respectively coupled to the outputs of the second circulators C2k of the various transponders TD3k. It comprises at least one output which is coupled to one of the switching matrix MAT of the switching device SD of the node SN.

In the non-limiting example depicted in Figure 4, a variable optical attenuator ACk, such as a VOA, is placed between the output of each second circulator C2k and the corresponding input of the coupling module CM, so as to be able to control the output power of the filtered optical signals which are delivered by said second circulator C2k. However, this variable attenuator ACk is not mandatory.

The input of each second circulator C2k is coupled to one of the outputs of a splitting module SM, which is of the same type as those described above with reference to Figures 2 and 3. This splitting module SM is designed so as to split, such as by doing so passively, the optical signals that it receives at an input, which is coupled to one of the outputs of the switching matrix MAT of the switching device SD of the node SN. Depending on its embodiment, the splitting module delivers to its outputs, which are respectively coupled to the inputs of the second circulators C2k as well as potentially to the input of at least one extraction module EM, either optical signals of all wavelengths (passively, for a power divider), or else optical signals which respectively and primarily exhibit reception wavelengths which are momentarily assigned to various receivers RR"k (or RR'p). It should be noted that a splitting module or splitter SM may potentially comprise at least two inputs coupled to two outputs of the switching matrix MAT of the switching device SD of the switching node SN.

As is schematically depicted in Figure 1, the switching node SN may potentially be coupled to at least one optical signal insertion module IM, and potentially to at least one optical signal extraction module EM.

It should be noted that the insertion module IM may be connected to one of the inputs of a switching module SWM (potentially a dedicated one) one output of which is coupled to an input of the switching matrix MAT, or to an input of the switching matrix MAT. Likewise, the input of an extraction module EM may be connected to one of the outputs of the splitting module SM (potentially a dedicated one) one input of which is coupled to an output of the switching matrix MAT, or to an output of the switching matrix MAT.

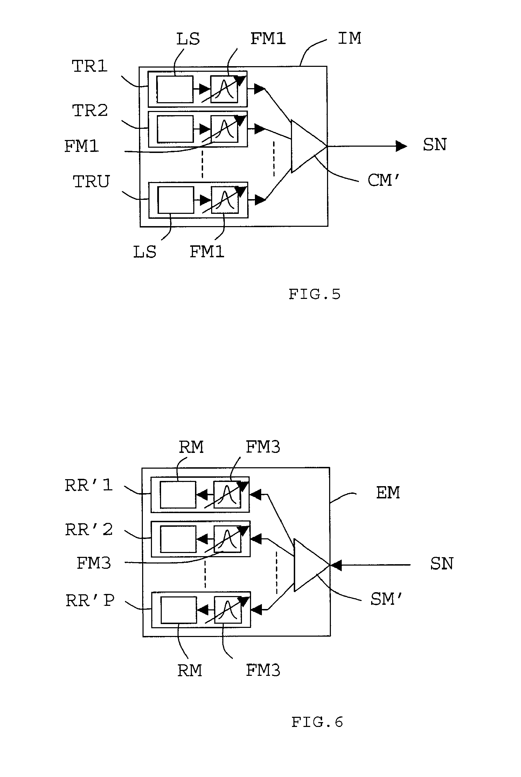

As is schematically depicted in the non-limiting example embodiment shown in Figure 5, the optical signal insertion module IM comprises at least one transmitter TRu (u = 1 to U, where U ≥1) which may be of the same type as the one described above with reference to Figure 2. In such a case, it comprises a laser source LS, which not only delivers optical signals along the insertion wavelength which had momentarily been assigned to its transmitter TRu, but also the noise which is particularly made up of the lateral (or secondary) modes, and an integrated tunable filtering module FM1 which is momentarily configured so as to allow through only the optical signals whose insertion wavelength approximately exhibit the assigned insertion wavelength. In this manner, each transmitter TRu delivers filtered optical signals at its output, i.e. signals stripped of secondary modes, which therefore all approximately exhibit the assigned insertion wavelength momentarily assigned to it.

When the insertion module IM comprises at least two (U > 1) transmitters TRu (as depicted), it further comprises a passive coupler MC' comprising U inputs, respectively coupled to the outputs of the U transmitters TR1 to TRU, and an output, coupled to one of the inputs of a switching module SWM of which one output is coupled to one input of the switching matrix MAT, or to one input of the switching matrix MAT (see Figure 1).

It should be noted that in one variant (not depicted), the insertion module IM may comprise at least one transmitter TR"u (u = 1 to U, where U ≥1), which may be of the same type as the one described above with reference to Figure 3. In such a case, it primarily comprises a laser source which delivers at one output optical signals along the insertion wavelength which had momentarily been assigned to its transmitter TR"u. The output of the transmitter TR"u (which, here, is the output of its laser source) feeds into the input of an external tunable filtering module FM1u which is momentarily configured so as to allow through only the optical signals whose insertion wavelength is approximately the same as the one assigned. In this manner, each tunable filtering module FM1u filtered optical signals at its output, i.e. signals stripped of secondary modes, which therefore all have approximately the same insertion wavelength as the one momentarily assigned to said transmitter TR"u to which it is coupled. When the insertion module IM comprises at least two (U > 1) transmitters TR"u (as depicted), it further comprises a passive coupler MC' comprising U inputs, respectively coupled to the outputs of the U transmitters TR"1 to TR"U, and at least one output, coupled to one of the inputs of a switching module SWM of which one output is coupled to one input of the switching matrix MAT, or to one input of the switching matrix MAT (see Figure 1).

As is schematically depicted in the non-limiting example embodiment in Figure 6, the optical signal extraction module EM comprises at least one receiver RR'p (p = 1 to P, P ≥1) which may be of the same type as the one described above with reference to Figure 2. In such a case, it comprises an integrated filtering module FM3 and an optical signal reception module RM tasked with receiving the optical signals extracted by the matrix MAT and exhibiting the same extraction wavelength as the one momentarily assigned to its receiver RRk. The filtering module FM3 is tunable according to the wavelengths of the multiplicity, for the purpose of blocking the optical signals whose wavelength is different from the extraction wavelength momentarily assigned to its receiver RR'p by the network CN. The filtering module FM3 therefore comprises an input in order to be supplied with extracted optical signals, and an output delivering filtered optical signals, i.e. signals stripped of secondary modes, which therefore all have approximately the same extraction wavelength as the one momentarily assigned to its receiver RRk. In this manner, the reception module RM of the receiver RR'p, at its input, which is coupled to the output of the associated filtering module FM3, only receives optical signals with approximately the same extraction wavelength as the one momentarily assigned to its receiver RRk.

Whenever the extraction module EM comprises at least two (P > 1) receivers RR'p (as depicted), it further comprises a splitting module SM' comprising at least one input, coupled to one of the outputs of a splitting module SM (potentially a dedicated one) of which one input is coupled to an output of the switching matrix MAT, or to an output of the switching matrix MAT (see Figure 1), and P outputs, coupled respectively to the inputs of the P receivers RR'1 to RR'P.

It should be noted that in one variant (not depicted), the extraction module EM may comprise at least one receiver RR'p (p = 1 to P, where P ≥1), which may be of the same type as the one described above with reference to Figure 3. In such a case, it primarily comprises an optical signal reception module tasked with receiving optical signals extracted by the matrix MAT and exhibiting the same extraction wavelength which was momentarily assigned to its receiver RRk. The input of this receiver RR'p is coupled to the output of an external filtering module FM3p. Said module is tunable according to the wavelengths of a multiplicity, for the purpose of blocking the optical signals whose wavelength is different from the extraction wavelength momentarily assigned by the network CN to the receiver RR'p to which it is coupled. The filtering module FM3p therefore comprises an input in order to be supplied with extracted optical signals, and an output delivering filtered optical signals, i.e. signals stripped of secondary modes, which therefore all have approximately the same extraction wavelength as the one momentarily assigned to the receiver RRk to which it is coupled. In this manner, the receiver RR'p, at its input, which is coupled to the output of the associated filtering module FM3p, only receives optical signals with approximately the same extraction wavelength as the one momentarily assigned to it.

Above, example embodiments of a switching node SN have been described, wherein the switching device comprises both an insertion module IM and an extraction module EM, with reference to Figure 1. However, the invention further pertains to situations wherein the switching device SD only comprises an extraction module EM or an insertion module IM.

Furthermore, in the preceding text, example embodiments wherein a single switching device SD both is supplied with filtered signals by transponders TDnk, and in turn supplies those same transponders TDnk with signals, have been described. However, situations may be envisioned wherein a first switching device SD1 is supplied with filtered signals by transponders TDnk, and a second switching device SD2 supplies these same transponders with signals TDnk. In other words, the insertion and extraction of signals concerning a set of transponders TDnk may be performed by different switching devices.

Additionally, in the preceding text, example embodiments wherein the transponders TDnk comprise either receivers RRk with an integrated tunable filtering module FM2, or else receivers RR"k respectively coupled to external tunable filtering modules FM2, have been described. However, it is possible to envision situations wherein the reception filtering is performed within the switching device SD. If so, each output port (or optical fiber) of the switching device, which is being filtered, is connected to a single receiver which has no filtering module.

Finally, in the preceding text, example embodiments wherein the input ports of the switching device SD are supplied by the outputs of a single switching module SWM. However, it is possible to envision situations wherein the input ports of the switching device SD are supplied by the outputs of multiple switching modules SWM.

The invention is not limited to the embodiments of the optical signal transmitter, optical signal transponder, optical signal switching device, and optical signal switching node described above, which are given only by way of example; rather, it encompasses all variants that a person skilled in the art may envision within the framework of the claims below.

## Claims

1. An optical signal transmitter (TRk, TRu), tunable according to a multiplicity of wavelengths, for an optical communication network (CN) capable of carrying wavelength-multiplexed optical signals, **characterized in that** it comprises an integrated filtering means (FM1), tunable according to the wavelengths of said multiplicity so as to block the optical signals the wavelength of which is different from a transmission wavelength selected from among the wavelengths of said multiplicity.

2. An optical signal transponder (TD1k) for an optical communication network (CN) capable of carrying wavelength-multiplexed optical signals, said transponder (TD1 k) comprising an optical signal transmitter (TRk) tunable according to a multiplicity of wavelengths, and an optical signal receiver (RRk), **characterized in that** said transmitter (TRk) is a transmitter according to claim 1.

3. A transponder according to claim 2, **characterized in that** said receiver (RRk) further comprises, or is coupled to the output of, a filtering means (FM2k) tunable according to the wavelengths of said multiplicity, so as to block the optical signals the wavelength of which is different from a reception wavelength selected from among the wavelengths of said multiplicity.

4. An optical signal transponder (TD2k) for an optical communication network (CN) capable of carrying wavelength-multiplexed optical signals, said transponder (TD2k) comprising an optical signal transmitter (TR"k) tunable according to a multiplicity of wavelengths, and an optical signal receiver (RRk), **characterized in that** it comprises a filtering means (FM1 k) coupled to the output of said transmitter (TR"k) and tunable according to the wavelengths of said multiplicity so as to block the optical signals the wavelength of which is different from a transmission wavelength selected from among the wavelengths of said multiplicity.

5. A transponder according to claim 4, **characterized in that** said receiver (RR"k) further comprises, or is coupled to the output of, a filtering means (FM2k) tunable according to the wavelengths of said multiplicity, so as to block the optical signals the wavelength of which is different from a reception wavelength selected from among the wavelengths of said multiplicity.

6. An optical signal transponder (TD3k) for an optical communication network (CN) capable of carrying wavelength-multiplexed optical signals, said transponder (TD3k) comprising an optical signal transmitter (TR"k) tunable according to a multiplicity of wavelengths and an optical signal receiver (RRk), a first circulator (C1 k) coupled to the output of said transmitter (TR"k) and to the input of said receiver (RR"k), and a second circulator (C2k) comprising an input/output coupled to an input/output of said first circulator (C1k), an output and an input, **characterized in that** it further comprises a filtering means (FM5k) coupled to the inputs/outputs of said first circulator (C1k) and said second circulator (C2k) and tunable according to the wavelengths of said multiplicity, so as to block the optical signals the wavelength of which is different from a reception wavelength selected from among the wavelengths of said multiplicity.

7. An optical signal insertion module (IM) for an optical communication network (CN) capable of carrying wavelength-multiplexed optical signals, **characterized in that** it comprises at least one transmitter (TRu) according to claim 1 for inserting filtered optical signals according to an insertion wavelength chosen from among a multiplicity of wavelengths.

8. An insertion module according to claim 7, **characterized in that** it comprises at least two optical signal transmitters (TR'u), and coupling means (CM') designed to passively couple the filtered optical signals delivered by said transmitters (TR'u).

9. A method for transmitting optical signals (TRk, TRu), tunable according to a multiplicity of wavelengths, for an optical communication network (CN) capable of carrying wavelength-multiplexed optical signals, **characterized in that** it comprises a step of filtering, via a filtering means, tunable according to the wavelengths of said multiplicity, so as to block the optical signals the wavelength of which is different from a transmission wavelength selected from among the wavelengths of said multiplicity.
